# EUROPÄISCHE PATENTANMELDUNG

(11) **EP 3 892 467 A1**
(43) Veröffentlichungstag der Anmeldung: **13.10.2021**
(21) Anmeldenummer: 20168583.1
(22) Anmeldetag: 07.04.2020
(51) Int. Cl.: B32B 37/26, B32B 38/04, H02K 15/02, B32B 37/12

(54) **VORRICHTUNG UND EIN VERFAHREN ZUM VERBINDEN VON BLECHTEILEN ZU BLECHPAKETEN**

(71) Anmelder: voestalpine Automotive Components Dettingen GmbH & Co. KG, 72581 Dettingen an der Erms (DE)
(72) Erfinder: Lanksweirt, Jochen, 89522 Heidenheim (DE); Bursy, Heinrich, 73268 Erkenbrechtsweiler (DE)
(74) Vertreter: Jell, Friedrich

(57) **Zusammenfassung**

Es wird eine Vorrichtung und ein Verfahren zum Verfahren zum Verbinden von Blechteilen (2) zu Blechpaketen (3) gezeigt, bei dem Blechteile (2) von einem Elektroband (5) mithilfe einer, einen Stempel (13) aufweisenden Stanzstufe (11) vereinzelt, insbesondere abgetrennt, werden, wobei das Elektroband (5) an zumindest einer seiner Flachseiten (6, 7) eine, vorzugsweise thermisch aktivierbare, Schmelzklebelackschicht (8), insbesondere Backlacksicht, aufweist, die vereinzelten Blechteile (2) gestapelt und zu mehreren Blechpaketen (3) durch Aktivierung der Schmelzklebelackschicht (8) stoffschlüssig miteinander verbunden werden, wobei auf das Elektroband (5) und/oder auf das vereinzelte Blechteil (2) ein Trennmittel (17) aufgebracht wird, um damit die Trennung der gestapelten Blechteile (2) in Blechpakete (3) zu erleichtern. Um vorteilhafte Verhältnisse zu schaffen, wird vorgeschlagen, der Stempel (13) der Stanzstufe (11) ein, insbesondere flüssiges, Fluid (17.1) als Trennmittel (17) auf das Elektroband (5) und/oder auf das vereinzelte Blechteil (2) aufbringt.

## Beschreibung

Die Erfindung betrifft eine Vorrichtung und ein Verfahren zum Verbinden von Blechteilen zu einem Blechpaketen, bei dem Blechteile von einem Elektroband mithilfe einer, einen Stempel aufweisenden Stanzstufe vereinzelt, insbesondere abgetrennt, werden, wobei das Elektroband an zumindest einer seiner Flachseiten eine, vorzugsweise thermisch aktivierbare, Schmelzklebelackschicht, insbesondere Backlacksicht, aufweist, die vereinzelten Blechteile gestapelt und zu mehreren Blechpaketen durch Aktivierung der Schmelzklebelackschicht stoffschlüssig miteinander verbunden werden, wobei zumindest auf das Elektroband und/oder auf das vereinzelte Blechteil ein Trennmittel aufgebracht wird, um damit die Trennung der gestapelten Blechteile in Blechpakete zu erleichtern.

Trennmittel auf einem mit einer Schmelzklebelackschicht beschichteten Elektroband vorzusehen, ist beispielsweise aus der WO2014089593A1 bekannt. Damit wird die Trennung der Blechpakte aus paketierten Blechteilen erleichtert. Beispielsweise wird das Trennmittel vor der Stanzstufe auf das Elektroband aufgesprüht, die das Blechteil vom Elektroband trennt und in eine Stapeleinrichtung drängt.
Das Aufbringen des Trennmittels erfolgt also in einem dem Trennen vorhergehenden Schritt - was zu einem erhöhten Aufwand in der Synchronisation des Auftragens des Trennmittels und der Steuerung des Folgestanzwerkzeugs führt. Zudem erfährt das Elektroband nach dem Auftragen eine Bewegung in Längsrichtung zur letzten Stanzstufe hin, was die Positionierung des Trennmittels auf der Schmelzklebelackschicht gefährden kann. Eine daraus folgende, ungenaue Applikation des Trennmittels erschwert aber nicht nur das Trennen der gestapelten Blechpakete voneinander, sondern kann auch dazu führen, die Blechteile eines Blechpaketes in unerwünschter Weise einen verminderten Zusammenhalt aufweisen. Dies erschwert die Reproduzierbarkeit des Verfahrens.

Die Erfindung hat sich daher die Aufgabe gestellt, solch ein Verfahren des Stands der Technik mit einer Maßnahme zur Erleichterung der Trennung von Blechpaketen in seiner Reproduzierbarkeit zu verbessern. Zudem soll dieses Verfahren auch einfacher zu handhaben sein.

Die Erfindung löst die gestellte Aufgabe durch die Merkmale des Anspruchs 1.

Dadurch, dass der Stempel der Stanzstufe ein Fluid als Trennmittel auf das Elektroband und/oder auf das vereinzelte Blechteil aufbringt, unterliegt das Trennmittel auf dem Elektroband keiner Bewegung in die Vorschubrichtung des Elektrobands - auch kann ein Trennittel auf das Elektroband oder vereinzelte Blechteil aufgebracht werden, ohne, dass dabei eine Bewegung des Elektrobands in dessen Vorschubrichtung erfolgt. Dies kann unter anderem eine Lagefixierung sowie eine besonders genaue Positionierbarkeit des Trennmittels sicherstellen, was besonders von Vorteil ist, wenn es sich beim Fluid um eine Flüssigkeit handelt.
Dieser Effekt ist nicht nur einer exakten Trennbarkeit der Blechpakete, sondern auch der Stabilität der Blechpakete selbst förderlich, da das Trennmittel nicht in unerwünschte Bereiche der Blechteile vordringen kann bzw. nicht über den erwünschten Bereich des Elektrobands hinaus aufgetragen wird - welche Gefahr insbesondere besteht, wenn es sich bei dem Fluid um eine Flüssigkeit handelt.
Das erfindungsgemäße Verfahren kann daher eine hohe Reproduzierbarkeit aufweisen. Zudem ist dieses Verfahren vergleichsweise handhabungsfreundlich, da über die Taktung der letzten Stanzstufe die Applikation des Trennmittels einfach gesteuert werden kann.

Bringt der Stempel beim Vereinzeln des Blechteils das Fluid auf, kann er selbst als örtliche Begrenzung des Trennmittel-Auftrags dienen. Somit ist die Reproduzierbarkeit des Verfahrens weiter verbesserbar.

Schließt der Stempel mit zumindest einer Schneidkante beim Aufbringen des Fluids an die Schmelzklebelackschicht dicht an und begrenzt dieser damit die jene Fläche an die Schmelzklebelackschicht dicht an, und begrenzt er damit jene Fläche (F) an der Schmelzklebelackschicht zumindest teilweise, auf der das Fluid aufgebracht wird, kann sich Möglichkeit ergeben, dass die Schneidkante ein seitlichen Austreten des Trennmittels verhindert. Dies erleichtert ein sicheres und ausreichendes Auftragen des Trennmittels weiter. Eine hohe Reproduzierbarkeit ist dadurch zu erreichen.

Vorzugsweise wird das Fluid in einem berührenden Druckverfahren aufgebracht. Dies kann die Genauigkeit der Applikation an Trennmittel erhöhen und damit das exakte Trennen der Blechteile in Blechpakete weiter erleichtern.

Weist der Stempel einen gegenüber seinem Stempelboden beweglichen Druckstempel, insbesondere Drucktampon oder Filz, auf, der das Fluid aufbringt, ist die Applikation des Trennmittels weiter erleichterbar - und zwar selbst bei Oberflächenunebenheiten des Elektrobands oder des vereinzelten Blechteils, um auf mithilfe des berührenden Stempels ausreichend Trennmittel aufzutragen.

Alternativ -also anstatt einem Aufbringen des Trennmittels wie vorstehend beschrieben unter berührendem Kontakt - ist vorstellbar, dass das Fluid aufgesprüht wird.

Vorzugsweise weist hierzu der Stempel mindestens eine Sprühdüse auf, die das Fluid mit einer rechteckförmigen Aufprallfläche aufbringt.

Die Erfindung hat sich außerdem die Aufgabe gestellt, eine Vorrichtung zum Verbinden von Blechteilen zu einem Blechpaket zu schaffen, das eine vereinfachte Konstruktion aufweist, dennoch aber standfest miteinander verbundene Blechteile in Blechpakete trennen kann.

Die Erfindung löst die gestellte Aufgabe durch die Merkmale des Anspruchs 8.

Indem der Stempel der Stanzstufe die Einrichtung aufweist, welche Einrichtung ausgebildet ist, das als, insbesondere flüssiges, Fluid ausgebildete Trennmittel auf das Elektroband und/oder auf das vereinzelte Blechteil aufzubringen, kann das Beschichten nur jenes Blechteils sichergestellt werden, das für die exakte Trennung der miteinander verbundenen Blechteile in Blechpakete verantwortlich ist. Diese Maßnahme ist auch verhältnismäßig einfach am Stempel vorzusehen, was die Konstruktion der Vorrichtung vereinfacht.

Vorzugsweise weist der Stempel einen Stempelboden und mindestens eine Schneidkante auf, die dem Stempelboden vorspringt und ausbildet ist, mit der Schmelzklebelackschicht eine Dichtfläche für das Fluid auszubilden. Damit dient die Schneidkante zusätzlich zur Trennfunktion auch der Begrenzung der Applikation der Schmelzklebelackschicht mit Fluid. Dies erleichtert ein sicheres und ausreichendes Auftragen des Trennmittels weiter. Eine hohe Reproduzierbarkeit ist dadurch zu erreichen. Eine hohe Reproduzierbarkeit ist dadurch zu erreichen.

Die Vorrichtung kann eine besonders hohe Genauigkeit der Applikation erreichen, wenn die Einrichtung einen gegenüber dem Stempel beweglichen Druckstempel, insbesondere Drucktampon oder Filz, zum Aufbringen des Fluids aufweist, wobei der Druckstempel in einer Ausnehmung am Stempelboden des Stempels vorgesehen ist. Erfindungsgemäß kann auch das Aufbringen einer ausreichenden Menge von Trennmittel mithilfe des berührenden Stempels selbst bei Oberflächenunebenheiten sichergestellt werden.

Ein berührungsfreies Aufbringen des Trennmittels ist ebenso vorstellbar, indem die Einrichtung eine Düse, insbesondere eine Flachstrahldüse, zum Aufbringen des Fluids aufweist. Beispielsweise kann mit einer zentralen Anordnung der Einrichtung am Stempelboden für eine gleichmäßige Verteilung des Trennmittels über die zu beschichtende Fläche am Elektroband und/oder Blechteil gesorgt werden.

In den Figuren wird beispielsweise der Erfindungsgegenstand anhand einer Ausführungsvariante näher beschrieben. Es zeigen
- Fig. 1: eine schematische Ansicht zu einer Vorrichtung zur Durchführung des erfindungsgemäßen Verfahrens,
- Fig. 2: eine Detailansicht auf eine Stanzstufe der Fig. 1 in einer anderen Bewegungsstellung der Vorrichtung,
- Fig. 3: eine Draufsicht zur Detailansicht der Fig. 2 und
- Fig. 4: eine Draufsicht zur Fig. 2 auf ein anders ausgeformtes Blechteil.

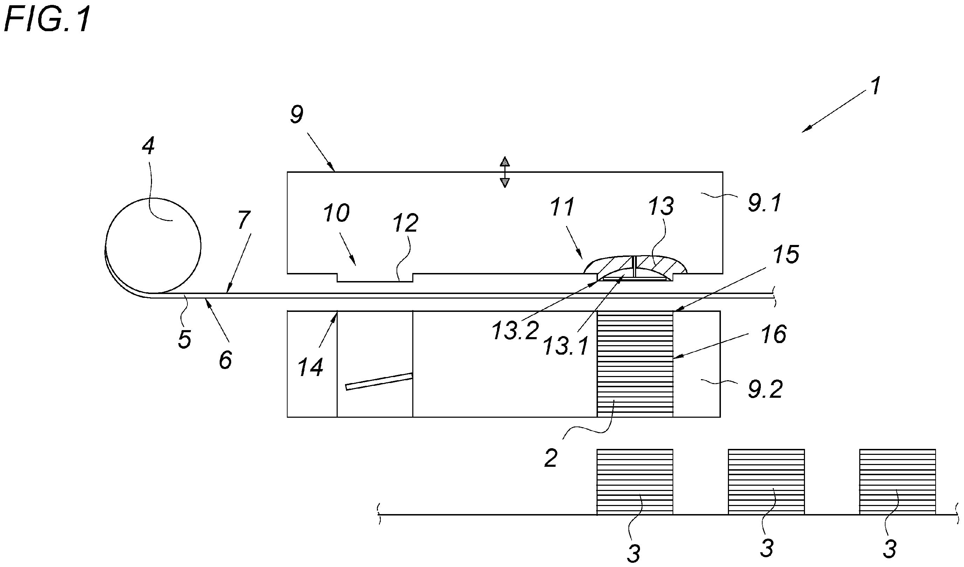

Nach Fig. 1 wird eine Vorrichtung 1 zur Durchführung des erfindungsgemäßen Verfahrens schematisch dargestellt. Diese Vorrichtung 1 dient dem Paketieren von freigestanzten Blechteilen 2 zu Blechpaketen 3. Hierzu wird von einem Coil 4 ein Elektroband 5 abgehaspelt, welches auf einer seiner Flachseiten 6, 7 eine - im Ausführungsbeispiel vollflächig aufgetragene - heißhärtende Schmelzklebelackschicht 8 aufweist - wobei selbstverständlich eine Schicht aus Schmelzklebelack auch auf beiden Flachseiten 6 und 7, ebenfalls vollflächig, vorgesehen sein kann.

Solch ein thermohärtbarer bzw. heißhärtender Schmelzklebelack ist auch unter der Bezeichnung "Backlack" bekannt. Beispielsweise kann der Schmelzklebelack eine Epoxidharzbasis aufweisen. Vorzugsweise handelt es sich beim Schmelzklebelack um ein Bisphenol-basiertes Epoxidharz-System mit einem Härter, beispielsweise mit einer Dicyandiamidbasis. Insbesondere kann es sich beim erwähnten Schmelzklebelack um ein Bisphenol-A-Epichlorhydrinharz-System mit Dicyanamid als Härter handeln. Dieses zweistufig aushärtende Epoxidharz-System befindet sich auf dem Elektroband im B-Zustand. Damit ist der teilvernetzte Schmelzklebelack noch reaktionsfähig. Durch Wärmezufuhr regeagiert der sich im B-Zustand befindliche Schmelzklebelack weiter und kann damit in den vollvernetzten C-Zustand übergeführt werden, was auch als Verbacken bezeichnet wird. Typischerweise hat diese teilvernetzte Schmelzklebelackschicht eine Dicke von einigen Mikrometern.

Vom schmelzklebelack-beschichteten Elektroband 5 werden mithilfe eines Stanzwerkzeugs 9 mehrere Blechteile 2 vereinzelt, was wie im Allgemeinen erwähnt, ein Abtrennen, wie beispielsweise Ausschneiden, Abschneiden, Ausklinken, Beschneiden, Zerteilen, Ausdrücken etc. sein. Wie der Fig. 1 weiter zu entnehmen, führt das Stanzwerkzeug 9, beispielsweise hier ein Folgestanzwerkzeug oder Folgeverbundwerkzeug, ein Trennen mit mehreren Hüben durch. Das Stanzwerkzeugs 9 kann daher mehr als zwei Stanzstufen aufweisen - was in den Figuren nicht dargestellt ist.

Mit einer ersten Stanzstufe 10 wird das Elektroband 5 für ein Freistanzen vorbereitet - beispielsweise, indem ein Teil 11 abgetrennt wird, um so Aussparungen am Blechpaket 3 zu bilden. Dieses Vorbearbeiten des Elektrobands bereitet zudem das Blechband für die Vereinzelung der Blechteile 2 vor.

Mit einer zweiten Stanzstufe 11 werden danach aus dem Elektroband 5 die Blechteile 2 durch Abtrennen vereinzelt. Solch ein Abtrennen kann - beispielhaft erwähnt - ein Ausschneiden, Abschneiden, Ausklinken, Beschneiden, Zerteilen, Ausdrücken etc. sein.

Beide Stanzstufen 10 und 11 weisen Stempel 12 und 13 auf, die dem Oberwerkzeug 9.1 des Stanzwerkzeugs 9 zugehören. Die Stempel 12 und 13 wirken mit den jeweiligen Matrizen 14, 15 des Unterwerkzeug 9.2 des Stanzwerkzeugs 9 zusammen.

Mithilfe der Stanzstufe 11 werden die vereinzelten Blechteile 2 durch Druck des Oberwerkzeugs 9.1 in eine Stapeleinrichtung 16 gedrängt bzw. dort gestapelt. Hierzu weist die Stapeleinrichtung 16 eine Führung im Unterwerkzeug 9.2 auf. Auch ist ein nicht näher dargestellter Gegenhalter 10 in der Führung vorgesehen.
Die Stapeleinrichtung 16 kann aktiv beheizt werden, um die vorzugsweise latente Schmelzklebelackschicht 8 thermisch zu aktivieren und zwischen den Blechteilen 2 eine Klebstoffverbindung bzw. stoffschlüssige Verbindung herzustellen - also die thermohärtbare Schmelzklebelackschicht in den C-Zustand überzuführen. Vorstellbar ist hierbei, dass diese stoffschlüssige Verbindung, was auch als Verbacken der Blechteile 2 zu einem Blechpaket 3 bezeichnet wird, in einem anderen Werkzeug bzw. Ofen oder durch eine andere Art der Energiezufuhr als Wärme erfolgt, was nicht dargestellt ist.

Um die, die Stapeleinrichtung 16 verlassenden, miteinander verbundenen Blechteile 2 leichter in Blechpakete 3 trennen zu können, wird das Elektroband 5 dahingehend vorbereitet, dass ein Trennmittel 17 aufgebracht wird - und zwar auf jenen Teil der Schmelzklebelackschicht 8, die sich auf jenem Blechteil 2 befindet, welches das erste oder das letzte Blechteil 2 eines Blechpakets 3 sein soll. Als Trennmittel 17 wird im Ausführungsbeispiel ein flüssiges Fluid 17.1, nämlich eine Flüssigkeit, verwendet.

Im Gegensatz zum Stand der Technik erfolgt dieses Aufbringung in der zweiten Stanzstufe 11 - nämlich in jener, welche das Blechteil 2 von dem Elektroband 5 abtrennt bzw. damit die Vereinzelung durchführt. Erfindungsgemäß bringt der Stempel 13 der zweiten Stanzstufe 11 dieses Fluid 17.1 auf das Elektroband 5 und/oder auf das vereinzelte Blechteil 4 auf. Vorzugsweise wird dieses Fluid auf die Schmelzklebelackschicht 8 aufgebracht. Es ist aber vorstellbar, dieses Fluid auf eine nicht beschichtete Flachseite des Elektrobands 5 und/oder des Blechteils 2 oder auch eine andere Beschichtung des Elektroband 5 und/oder des Blechteils 2 aufzubringen.

Der Stempel 13 weist hierzu eine Einrichtung 18 auf, die in einer Ausnehmung 19 am Stempelboden 13.1 - nämlich eine Wölbung bzw. eines Zurücksprungs des Stempelbodens 13.1 nach innen - vorgesehen ist und das Fluid 17.1 in einem berührenden Druckverfahren auf die Schmelzklebelackschicht 8 aufbringt. Im Allgemeinen gesprochen, wird das Fluid 17.1 auf das Elektroband 5 und/oder auf das Blechteil 2 aufgebracht, damit sich dieses dann zwischen zwei gestapelten Blechteilen 2 befindet.

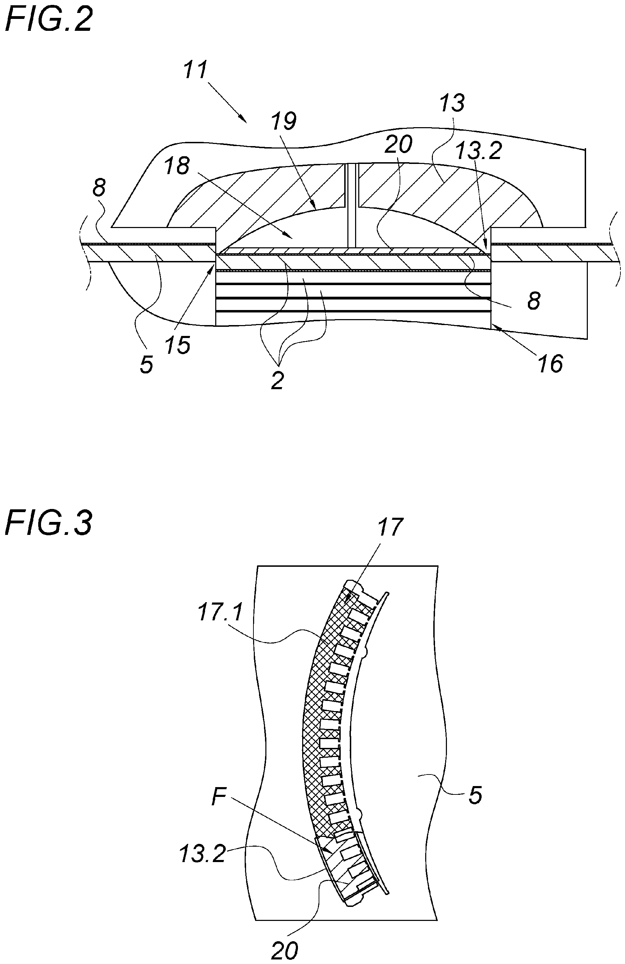

Ein Druckstempel 20, der in Fig. 2 und in aufgerissener Ansicht auch in Fig. 3 teilweise zu erkennen ist, ist mit dem Fluid 17.1 getränkt - oder lediglich benetzt - und wird an die Schmelzklebelacksicht 8 angedrückt. Hierzu wird der Druckstempel 20 relativ zum Stempel 13 bewegt, und zwar linear in Richtung des Elektrobands 5 verschoben. Um den Stempel 13 mit dem Fluid zu tränken, kann er als Drucktampon oder als Filz ausgeführt sein.

Wie außerdem den Figuren 2 und 3 zu entnehmen, wird dieses Trennmittel 17 beim Vereinzeln bzw. im Ausführungsbeispiel beim Trennen des Blechteils 2 durch den Stempel 13 aufgebracht. Dadurch dichtet die umlaufende Schneidkante 13.2 des Stempels 13 das berührende Drucken ab, was ein Austreten des Trennmittels 17 verhindert. Zwischen Stempelboden 13.1 und umlaufender Schneidkante 13.2 bildet sich sohin eine Art Kavität, die das berührende Drucken begünstigt und auch für ein besonders genaues Drucken sorgt. Eine hohe Reproduzierbarkeit wird damit gewährleistet, um das Fluid 17.1 nur an der gewünschten Fläche F vorzusehen.

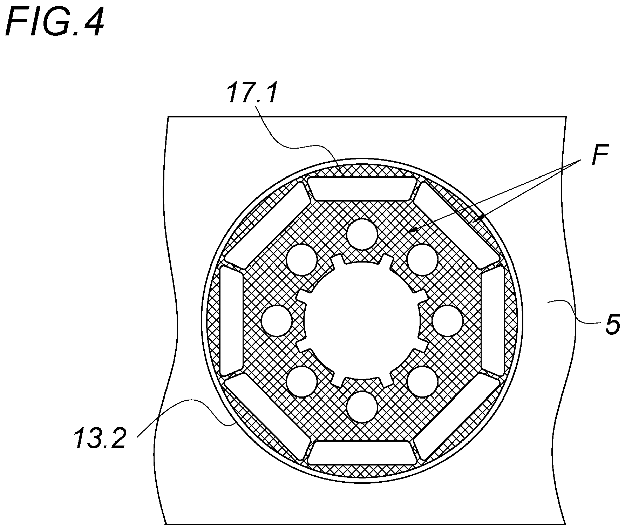

Gleiches gilt für das nach Fig. 4 anders, beispielsweise als Rotor, ausgeformte Blechteil 2. Auch hier wird durch die Einrichtung 18 nur an der gewünschten Fläche F das Fluid 17.1 vorzusehen.

Die Blechpakete 3 können beispielsweise bei elektrischen Maschinen als Stator oder Rotor verwendet werden. Aber auch andere Einsatzzwecke solcher Lamellenpakete beispielsweise als Eisenkern für Transformatoren, Spulen etc. sind denkbar.

## Patentansprüche

1. Verfahren zum Verbinden von Blechteilen (2) zu Blechpaketen (3), bei dem Blechteile (2) von einem Elektroband (5) mithilfe einer, einen Stempel (13) aufweisenden Stanzstufe (11) vereinzelt, insbesondere abgetrennt, werden, wobei das Elektroband (5) an zumindest einer seiner Flachseiten (6, 7) eine, vorzugsweise thermisch aktivierbare, Schmelzklebelackschicht (8), insbesondere Backlacksicht, aufweist, die vereinzelten Blechteile (2) gestapelt und zu mehreren Blechpaketen (3) durch Aktivierung der Schmelzklebelackschicht (8) stoffschlüssig miteinander verbunden werden, wobei auf das Elektroband (5) und/oder auf das vereinzelte Blechteil (2) ein Trennmittel (17) aufgebracht wird, um damit die Trennung der gestapelten Blechteile (2) in Blechpakete (3) zu erleichtern, **dadurch gekennzeichnet, dass** der Stempel (13) der Stanzstufe (11) ein, insbesondere flüssiges, Fluid (17.1) als Trennmittel (17) auf das Elektroband (5) und/oder auf das vereinzelte Blechteil (2) aufbringt.

2. Verfahren nach Anspruch 1, **dadurch gekennzeichnet, dass** der Stempel (13) beim Vereinzeln des Blechteils (2) das Fluid (17.1) aufbringt.

3. Verfahren nach Anspruch 2, **dadurch gekennzeichnet, dass** der Stempel (13) mit zumindest einer Schneidkante (13.2) beim Aufbringen des Fluids (17.1) an die Schmelzklebelackschicht (8) dicht anschließt und damit jene Fläche (F) an der Schmelzklebelackschicht zumindest teilweise begrenzt, auf der das Fluid (17.1) aufgebracht wird.

4. Verfahren nach einem der Ansprüche 1 bis 3, **dadurch gekennzeichnet, dass** das Fluid (17.1) in einem berührenden Druckverfahren aufgebracht wird.

5. Verfahren nach Anspruch 4, **dadurch gekennzeichnet, dass** der Stempel (13) einen gegenüber seinem Stempelboden (13.1) beweglichen Druckstempel (20), insbesondere Drucktampon oder Filz, aufweist, der das Fluid (17.1) aufbringt.

6. Verfahren nach einem der Ansprüche 1 bis 3, **dadurch gekennzeichnet, dass** das Fluid (17.1) aufgesprüht wird.

7. Verfahren nach Anspruch 6, **dadurch gekennzeichnet, dass** der Stempel (13) mindestens eine Sprühdüse aufweist, die das Fluid (17.1) mit einer rechteckförmigen Aufprallfläche aufbringt.

8. Vorrichtung zum Verbinden von Blechteilen (2) zu Blechpaketen (3) mit einem Stanzwerkzeug (10), das eine Stanzstufe (11) mit einem Stempel (13) zum Vereinzeln von Blechteilen (2) von einem, an zumindest einer seiner Flachseiten (6, 7) mit einer, vorzugsweise thermisch aktivierbaren, Schmelzklebelackschicht (8, 9) beschichteten Elektroband (5) aufweist, mit einer Stapeleinrichtung (16) zum Stapeln der vereinzelten Blechteile (2) zu mehreren Blechpaketen (3), und mit einer Einrichtung (18), die ein Trennmittel aufweist und ausgebildet ist, dieses Trennmittel auf das Elektroband (5) und/oder auf das vereinzelte Blechteil (2) aufzubringen, um damit die Trennung der gestapelten Blechteile (2) in Blechpakete (3) zu erleichtern, **dadurch gekennzeichnet, dass** der Stempel (13) der Stanzstufe (11) die Einrichtung (18) aufweist, welche Einrichtung (18) ausgebildet ist, das als, insbesondere flüssiges, Fluid (17.1) ausgebildete Trennmittel (17) auf das Elektroband (5) und/oder auf das vereinzelte Blechteil (2) aufzubringen.

9. Vorrichtung nach Anspruch 8, **dadurch gekennzeichnet, dass** der Stempel (13) einen Stempelboden (13.1) und mindestens eine Schneidkante (13.2) aufweist, die dem Stempelboden (13.1) vorspringt und ausbildet ist, mit der Schmelzklebelackschicht (8) eine Dichtfläche für das Fluid (17.1) auszubilden.

10. Vorrichtung nach einem der Ansprüche 8 bis 9, **dadurch gekennzeichnet, dass** die Einrichtung (18) einen gegenüber dem Stempel (13) beweglichen Druckstempel (20), insbesondere Drucktampon oder Filz, zum Aufbringen des Fluids (17.1) aufweist, wobei der Druckstempel (20) in einer Ausnehmung (19) am Stempelboden (13.1) des Stempels (13) vorgesehen ist.

11. Vorrichtung nach einem der Ansprüche 8 bis 9, **dadurch gekennzeichnet, dass** die Einrichtung (18) eine Düse, insbesondere eine Flachstrahldüse, zum Aufbringen des Fluids (17.1) aufweist.
